(19) Europäisches Patentamt
European Patent Office
Office européen des brevets

(11) **EP 1 267 071 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(51) Int Cl.⁷: **F02P 5/15**, F02D 41/14

(21) Anmeldenummer: **02010642.3**

(22) Anmeldetag: **11.05.2002**

(54) **Motorsteuerungsverfahren und Motorsteuerung**

Engine control method and engine control system

Procédé de pilotage de moteur et commande de moteur

(84) Benannte Vertragsstaaten:
**DE FR GB IT**

(30) Priorität: **12.06.2001 US 879641**

(43) Veröffentlichungstag der Anmeldung:
**18.12.2002 Patentblatt 2002/51**

(73) Patentinhaber: **DEERE & COMPANY**
Moline, Illinois 61265-8098 (US)

(72) Erfinder:
• **Kubesh, John Thomas**
San Antonio, TX 78250 (US)
• **Podnar, Daniel James**
San Antonio, TX 78248 (US)
• **Latusek, John Philipp**
Cedar Falls, IA 50613 (US)
• **McCaw, Donald Lee**
Dike, IA 50624 (US)

(74) Vertreter: **Magin, Ludwig Bernhard et al**
**Deere & Company**
**European Office**
**Patent Department**
**68140 Mannheim (DE)**

(56) Entgegenhaltungen:
EP-A- 0 308 870          US-A- 5 622 047
US-A- 5 809 967

**Beschreibung**

Die Erfindung betrifft ein Motorsteuerungsverfahren sowie eine Motorsteuerung zur Ausführung eines solchen Motorsteuerungsverfahrens.

Bei Motoren einer Baureihe treten zwischen einzelnen Maschinen große Mengen an Abweichungen zwischen den Emissionsabgaben auf. Diese Abweichungen sind das Ergebnis von Fertigungsabweichungen, welche an Motorbauteilen und an Sensoren eines Motorsteuersystems auftreten und erzeugen ein Problem, wenn Motorhersteller versuchen, immer niedrigere Emissionsrichtwerte zu erreichen. Da die Emissionsabweichungen bei der Auslegung einkalkuliert werden müssen, muss der mittlere Emissionswert so niedrig sein, dass auch Motoren, deren Emissionen über dem Mittelwert liegen, die notwendigen Emissionsstandards einhalten.

Die US-A-5,809,967 beschreibt ein System, welche den Zündzeitpunkt als eine Funktion einer gemessenen Sauerstoffkonzentration und eines Luft/Kraftstoffverhältnisses im Abgas steuert. Dieses System dient dazu, Abweichungen des an den Motor gelieferten Kraftstoffs auszugleichen, trägt aber nicht den abgegebenen Abgaswerten Rechnung.

Die US-A-5,622,047 zeigt ein Vorrichtung mit Sensoren, die unter anderem den Kraftstoffsättigungsgrad des Abgases eines Motors ermitteln und ausgehend von den durch die Sensoren ermittelten Wert, einen Zündzeitpunkt des Motors bestimmen.

Das der Erfindung zugrunde liegende Problem wird in den großen Abweichungen der Emissionswerte zwischen einzelnen Motoren einer Baureihe gesehen.

Dieses Problem wird erfindungsgemäß durch die Lehre der Patentansprüche 1 bzw. 7 gelöst, wobei in den weiteren Patentansprüchen die Lösung in vorteilhafter Weise weiterentwickelnde Merkmale aufgeführt sind.

Auf diese Weise wird ein Motorsteuerungsverfahren sowie eine Motorsteuerung zur Ausführung eines solchen Verfahrens zur Verfügung gestellt, wobei die Motorsteuerung ein Ermitteln einer Konzentration eines Bestandteils eines durch den Motor erzeugten Abgases, ein Erzeugen eines diese repräsentierenden Abgaswertes und die Steuerung wenigstens eines Sollwertes, bei dem es sich beispielsweise um den Zündzeitpunkt, ein Luft/Kraftstoffverhältnis, eine Leistungsverstärkung oder eine Einlasstemperatur handeln kann, in Abhängigkeit von dem Abgaswert umfasst.

Darüber hinaus kann ein Differenzwert bestimmt werden, indem ein Basiswert von dem Abgaswert abgezogen wird, und es kann, wenn der absolute Betrag des Differenzwertes einen Grenzwert übersteigt, die Motorsteuerung den Sollwert als eine Funktion des Differenzwertes verändern.

Es kann auch vorgesehen sein, dass eine Motordrehzahl und/oder ein Ansaugdruck bzw. ein Druck der Luft in einem Ansaugrohr ermittelt wird, wobei der Basiswert als eine Funktion der ermittelten Motordrehzahl und/oder des Ansaugdrucks bestimmt werden kann.

Auch die Feuchte der angesaugten Luft kann ermittelt werden, um den Basiswert als eine Funktion der Feuchte zu korrigieren. Dies kann auch durch einen berechneten Abgasstrom erfolgen.

In der Zeichnung ist ein nachfolgend näher beschriebenes Ausführungsbeispiel der Erfindung dargestellt. Es zeigt:

Fig. 1    ein schematisches Blockdiagramm eines Motorsteuerungsverfahrens und

Fig. 2    ein logisches Flussdiagramm eines durch eine Motorsteuerung entsprechend der vorliegenden Erfindung ausgeführten Algorithmus.

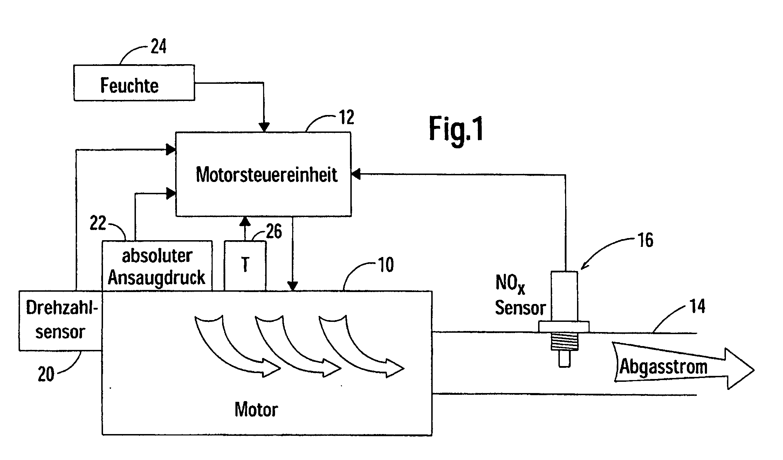

Bezugnehmend auf Fig. 1 wird ein Motor 10 durch eine elektronische Motorsteuereinheit (ECU) 12 gesteuert. Motorabgase fließen durch einen Auslasskrümmer 14. Eine Stickstoffoxid($NO_x$)-Sensoreinheit bzw. ein Abgassensor 16, wie er beispielsweise in dem US Patent Nr. 6,076,393 und in dem SAE Papier Nr. 960334, Seiten 137 - 142 von 1996 beschrieben wird, ist in dem Auslasskrümmer 14 angebracht und erzeugt ein $NO_x$-Signal bzw. einen Abgaswert, welcher die Menge an $NO_x$ in dem Motorabgas wiedergibt, und übermittelt dieses Signal an die Motorsteuereinheit 12. Die Motorsteuereinheit 12 empfängt auch ein Motorgeschwindigkeitssignal von einem üblichen Motordrehzahlsensor 20 und ein absolutes Ansaugrohrdrucksignal (MAP) von einem üblichen Ansaugrohrdrucksensor 22, welcher den Druck in einem Ansaugrohr des Motors 10 ermittelt. Ein Feuchtesensor 24 ermittelt die Feuchte der Ansaugluft und liefert ein Feuchtesignal an die Motorsteuereinheit 12. Optional nimmt ein üblicher Einlasslufttemperatursensor 26 die Temperatur der Motoreinlassluft auf und liefert ein Temperatursignal an die Motorsteuereinheit 12.

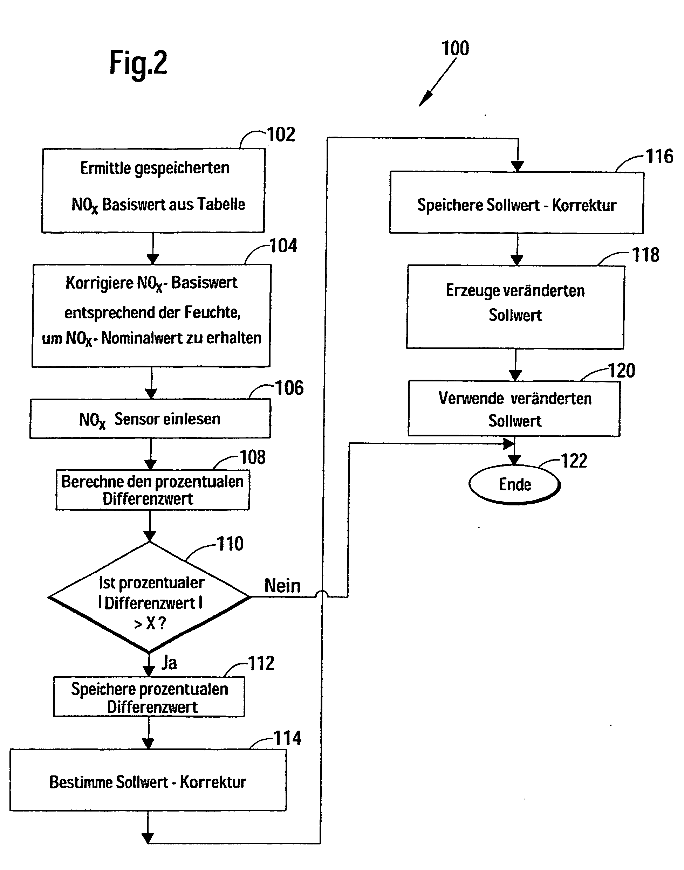

Die Motorsteuereinheit 12 führt periodisch einen Algorithmus oder eine Unterroutine 100 aus, welche durch das Flussdiagramm aus Fig. 2 wiedergegeben wird.

In Schritt 102 erhält die Motorsteuereinheit 12 einen Basis-$NO_x$-Wert, ($NO_x$ (basis)), welcher in einer Tabelle in einem Speicher der Motorsteuereinheit 12 als eine Funktion der ermittelten Motorgeschwindigkeit und als eine Funktion des ermittelten Ansaugrohrdrucks, oder als eine Funktion eines berechneten Luftstroms gespeichert wird. Der berechnete Luftstrom kann als eine Funktion des ermittelten Ansaugrohrdrucks, ermittelten Temperaturen von dem Temperatursensor 26, einer Motorgeschwindigkeit von dem Motorgeschwindigkeitssensor 20 und einer ermittelten Feuchte von dem Sensor 24 und unter Verwendung der bekannten Beziehung, welche von John B. Heywood auf Seite 54 von "Internal Combustion Engine Fundamentals" beschrieben wird, bestimmt werden.

Wenn es gewünscht wird, wird in Schritt 104 ein korrigierter oder $NO_x$-Nominalwert, $NO_x$(nom) als eine Funktion des Feuchtesignals erzeugt werden. Beispielsweise könnte die nominelle $NO_x$-Konzentration auf einem $NO_x$-Wert auf einem Standardfeuchte-Niveau basieren, und der nominelle $NO_x$-Wert kann um einen Wert korrigiert werden, welcher empirisch durch Beobachtungen, wie die Feuchte den $NO_x$-Wert bei verschiedenen Motoren verändert, bestimmt werden.

Schritt 106 liest den ermittelten $NO_x$-Wert, $NO_x$, von dem Abgassensor 16 ein.

Schritt 108 berechnet einen prozentualen $NO_x$-Differenzwert entsprechend der folgenden Gleichung:

$$\%Diff = 100 \times (NO_x (nom) - NO_x ) / NO_x (nom).$$

Wenn der absolute Wert des prozentualen Differenzwertes nicht größer als ein Grenzwert, wie beispielsweise 5%, ist, lenkt Schritt 110 den Algorithmus zurück zu Schritt 122, so dass der Motor 12 mit seinen normalen Steuersollwerten, wie beispielsweise der normalen Zündsteuerung gesteuert wird. Wenn der absolute Wert des prozentualen Differenzwertes größer ist als der Grenzwert, lenkt Schritt 110 den Algorithmus zu Schritt 112.

Schritt 112 speichert den Differenzwert aus Schritt 108 in einer anpassbaren Tabelle. Es liegt eine gespeicherte Basistabelle von Basiszündzeitpunktswerten als einer Funktion der Motordrehzahl sowie des Ansaugrohrdruckes vor, welche während einer Motorkalibrierung bestimmt werden kann. Es gibt auch eine anpassbare Tabelle, welche die Basistabelle "überdeckt" und welche verlangsamte und beschleunigte (korrigierte) Zündzeitpunktswerte aufweist. Schritt 114 bestimmt die Zündzeitpunktskorrekturen als eine Funktion des prozentualen Differenzwerts, und Schritt 116 speichert diese Zündzeitpunktskorrekturwerte in der anpassbaren Tabelle. Beispielsweise wird, wenn der prozentuale Differenzwert positiv ist, ein beschleunigter Zündzeitpunktswert erzeugt und gespeichert werden. Wenn der prozentuale Differenzwert negativ ist, wird ein verlangsamter Zündzeitpunktskorrekturwert erzeugt und gespeichert.

Schritt 118 legt den Zündzeitpunktskorrekturwert aus Schritt 114 an den gespeicherten Basiszündzeitpunktswert an und erzeugt einen modifizierten Zündzeitpunktswert als eine Funktion einer ermittelten Motordrehzahl und eines Ansaugrohrdrucks. Abschließend verwendet Schritt 102 diesen veränderten Zündzeitpunktswert an dem Motor 12, so dass der Motor 12 in Übereinstimmung damit arbeiten wird. Der Algorithmus endet bei Schritt 122.

Die Übertragung des obigen Flussdiagramms in eine Standardsprache zur Implementierung des durch das Flussdiagramm beschriebenen Algorithmus in einen Digitalcomputer oder einen Mikroprozessor wird für den üblichen Fachmann offensichtlich sein.

Somit kombiniert dieses System einen chemischen Sensor, wie beispielsweise einen $NO_x$-Sensor im Auslasskrümmer, mit einem elektronischen Steuerungssystem, welches die Motorkalibrierung anpassbar einstellt. Vorzugsweise wird ein $NO_x$-Sensor verwendet, um die $NO_x$-Konzentration direkt in dem Motorabgasstrom zu messen. Diese Konzentration wird mit einer nominellen $NO_x$-Konzentration für eine bestimmte Geschwindigkeit und Lastbedingung verglichen, welche in einer Tabelle in der Motorsteuereinheit gespeichert ist. Wenn die Differenz zwischen dem nominellen und dem ermittelten Wert größer ist als ein bestimmter Wert, wird die Differenz in einer anderen Tabelle gespeichert. Diese Differenz wird dann verwendet, um eine Korrektur an der Motorkalibrierung zu bestimmen. Beispielsweise könnte der Zündzeitpunkt leicht variiert werden, um die gewünschte Veränderung der $NO_x$-Emissionen zu erzeugen. Diese Veränderung des Zündzeitpunkts würde in einer anpassbaren, lernenden Tabelle gespeichert, so dass das nächste Mal, wenn der Motor mit dieser Geschwindigkeit und Lastbedingung betrieben wird, die Basismotorkalibrierung automatisch durch diesen Wert aus der anpassbaren Tabelle angepasst wird, und der $NO_x$-Wert nahe dem Nominalwert sein sollte.

Dieses System wird die Emissionswertvariabilität einzelner Motoren oder einer Gruppe von Motoren reduzieren. Mit Bezug auf einen individuellen Motor, könnte der $NO_x$-Verschlechterungsfaktor, beispielsweise der relative Anstieg der $NO_x$-Emissionen, wenn der Motor älter wird, reduziert werden, da das System einen $NO_x$-Wert aufrechterhält. Mit Bezug zu verschiedenen Motoren, kann die $NO_x$-Variation aufgrund von Motorvariationen aus der Fertigung oder Sensorvariationen reduziert werden. Das System reduziert wirksam die Variabilität aller Motorbauteile hinunter zu nur der Variabilität des $NO_x$-Sensors selbst.

Diese Technik könnte auch verwendet werden, um die Variabilität anderer Emissionsarten zu reduzieren, wenn die Sensoren für diese spezielle Art verfügbar ist. Beispielsweise könnte, wenn ein anwendbarer Kohlenwasserstoffsensor entwickelt ist, ein ähnlicher Satz von Tabellen zur Einstellung der Kalibrierung implementiert werden, um einen gewünschten Kohlenwasserstoffwert aufrechtzuerhalten. Andere Sensoren umfassen, aber sind nicht begrenzt auf, Partikel, Nicht-Methan-Kohlenwasserstoff (NMHC), Kohlenmonoxid (CO), und Formaldehyd (HCHO). Die Mittel zur Steuerung der Emissionsart, umfassen, sind aber nicht begrenzt auf den Zündzeitpunkt, das Luft/Kraftstoffverhältnis, eine Leistungsverstärkung, eine Einlasstemperatur und Last. Auch können Eingaben an den Motor umfassend, aber nicht begrenzt auf, die Feuchte, Sauerstoffkonzentration und Kraftstoffart als Variablen verändert werden, um die gewünschte Ausgabe aufrechtzuerhalten.

Diese Erfindung kann an jeder Leistung erzeu-

genden Einrichtung, welche $NO_x$ oder anderen Abgasbestandteilen, welche überwacht werden können, erzeugen und kann bis zu einem Grad dadurch gesteuert werden, dass eine Steuervariable verändert oder eine Eingabe an den Motor modifiziert wird.

Während die vorliegende Erfindung mit Bezug auf eine bestimmte Ausführungsform beschrieben wurde, soll es klar sein, dass viele Alternativen, Veränderungen und Variationen für den Fachmann im Lichte der vorstehenden Beschreibung offensichtlich sind. Entsprechend ist es beabsichtigt, dass die Erfindung alle solchen Alternativen, Veränderungen und Variationen, welche in den Schutzbereich der folgenden Ansprüche fallen, umfassen soll.

**Patentansprüche**

1. Motorsteuerungsverfahren, bei dem eine Konzentration eines Abgasbestandteils gemessen, in Abhängigkeit von dieser Konzentration ein Abgaswert bestimmt und zumindest ein Zündzeitpunkt der Motorsteuerung (12) als eine Funktion des ermittelten Abgaswerts derart gesteuert wird, dass die Konzentration des Abgasbestandteils möglichst wenig variiert, **dadurch gekennzeichnet, dass** es sich bei dem Abgasbestandteil um Stickstoffoxid ($NO_x$) handelt.

2. Motorsteuerungsverfahren nach Anspruch 1, **dadurch gekennzeichnet, dass** ein Basiswert erzeugt und ein Differenzwert berechnet wird, indem der Basiswert von dem ermittelten Abgaswert abgezogen wird, und der Sollwert als eine Funktion des Differenzwertes verändert wird.

3. Motorsteuerungsverfahren nach Anspruch 2, **dadurch gekennzeichnet, dass** der Sollwert als eine Funktion des Differenzwertes verändert wird, wenn der Differenzwert einen Grenzwert übersteigt.

4. Motorsteuerungsverfahren nach einem oder mehreren der vorherigen Ansprüche, **dadurch gekennzeichnet, dass** eine Motordrehzahl und/oder ein Ansaugdruck ermittelt und der Basiswert als eine Funktion der ermittelten Motordrehzahl und/oder des Ansaugdrucks bestimmt wird.

5. Motorsteuerungsverfahren nach Anspruch 2, **dadurch gekennzeichnet, dass** ein Abgasstromwert berechnet und der Basiswert als eine Funktion der Motordrehzahl und des Abgasstromwertes bestimmt wird.

6. Motorsteuerungsverfahren nach einem oder mehreren der vorherigen Ansprüche, **dadurch gekennzeichnet, dass** die Feuchte der Ansaugluft ermittelt und der Basiswert als eine Funktion dieser Feuchte korrigiert wird.

7. Motorsteuerung zur Ausführung eines Motorsteuerungsverfahrens nach einem oder mehreren der vorherigen Ansprüche mit wenigstens einem vorzugsweise in einem Abgaskrümmer eines Motors angeordneten Abgassensors (16), welcher eine Konzentration eines Abgasbestandteils, bei dem es sich um Stickoxid ($NO_x$) handelt, ermittelt, und einer Motorsteuereinheit (12), welche in Abhängigkeit von dieser Konzentration einen Abgaswert bestimmt und zumindest ein Zündzeitpunkt der Motorsteuerung als eine Funktion des Abgaswertes derart steuert, dass die Konzentration des Abgasbestandteils möglichst wenig variiert.

8. Motorsteuerung nach Anspruch 7, **dadurch gekennzeichnet, dass** die Motorsteuereinheit (12) einen Basiswert erzeugt, einen Differenzwert berechnet und den Sollwert als eine Funktion des Differenzwerts verändert.

9. Motorsteuerung nach Anspruch 8, **gekennzeichnet durch** einen Motordrehzahlsensor (20) und/oder einen Ansaugdrucksensor (22), wobei die Motorsteuereinheit (12) den Basiswert als eine Funktion der Motordrehzahl und/oder des Ansaugdruckes bestimmt.

10. Motorsteuerung nach Anspruch 8 oder 9, **gekennzeichnet durch** einen vorzugsweise in einem Ansaugrohr eines Motors angeordneten Feuchtesensor (24), wobei die Motorsteuereinheit (12) den Basiswert als eine Funktion der ermittelten Feuchte korrigiert.

**Claims**

1. An engine control method, in which a concentration of an exhaust gas components is measured, an exhaust gas value is determined from this concentration and at least an ignition point of the engine control system (12) is so controlled as a function of the determined exhaust gas value that the concentration of the exhaust gas component varies as little as possible, **characterized in that** the exhaust gas component involved is nitrogen oxide ($NO_x$).

2. An engine control method according to claim 1, **characterized in that** a base value is generated and a difference value is calculated, in which the base value is subtracted from the determined exhaust gas value and the set-point is altered as a function of the difference value.

3. An engine control method according to claim 2, **characterized in that** the set-point is altered as a function of the difference value when the difference value exceeds a limit value.

4. An engine control method according to one or more of the preceding claims, **characterized in that** an engine speed of rotation and/or an induction pressure is determined and the base value is determined as a function of the determined engine speed of rotation and/or the induction pressure.

5. An engine control method according to claim 2, **characterized in that** an exhaust gas flow value is calculated and the base value is determined as a function of the engine speed of rotation and the exhaust gas flow value.

6. An engine control method according to one or more of the preceding claims, **characterized in that** the humidity of the induction air is determined and the base value is corrected as function of this humidity.

7. An engine control system for implementing an engine control method according to one or more of the preceding claims, with at least one exhaust gas sensor (16) preferably arranged in an exhaust gas elbow of an engine, which determines a concentration of an exhaust gas component which involves nitrogen oxide ($NO_x$), and an engine control unit (12) which determines an exhaust gas value in dependence on this concentration and so controls at least an ignition point of the engine control system as a function of the exhaust gas value that the concentration of the exhaust gas component varies as little as possible.

8. An engine control system according to claim 7, **characterized in that** the engine control unit (12) generates a base value, calculates a difference value and alters the set-point as a function of the difference value.

9. An engine control system according to claim 8, **characterized by** an engine speed of rotation sensor (20) and/or an induction pressure sensor (22), wherein the engine control unit (12) determines the base value as a function of the engine speed of rotation and/or the induction pressure.

10. An engine control system according to claim 8 or 9, **characterized by** a humidity sensor (24) preferably arranged in the induction pipe of an engine, wherein the engine control unit (12) corrects the base value as a function of the determined humidity.

## Revendications

1. Procédé de pilotage d'un moteur, dans lequel une concentration d'un composant de gaz d'échappement est mesurée, une valeur de gaz d'échappement étant déterminée en fonction de cette concentration et au moins un point d'allumage de la commande du moteur (12) est piloté en tant que fonction de la valeur déterminée pour le gaz d'échappement, d'une manière telle que la concentration du composant du gaz d'échappement varie aussi peu que possible, **caractérisé en ce que** le composant du gaz d'échappement est un oxyde d'azote ($NO_x$).

2. Procédé de pilotage d'un moteur selon la revendication 1, **caractérisé en ce qu'**une valeur de base est élaborée et une valeur différentielle est calculée, la valeur de base étant tirée de la valeur déterminée pour le gaz d'échappement et la valeur prévue est modifiée en tant que fonction de la valeur différentielle.

3. Procédé de pilotage d'un moteur selon la revendication 2, **caractérisé en ce que** la valeur prévue est modifiée en tant que fonction de la valeur différentielle quand la valeur différentielle dépasse une valeur limite.

4. Procédé de pilotage d'un moteur selon l'une des revendications précédentes, **caractérisé en ce qu'**une vitesse de rotation du moteur et/ou une pression d'aspiration sont déterminées et la valeur de base est déterminée en tant que fonction de la vitesse de rotation et/ou de la pression d'aspiration déterminée.

5. Procédé de pilotage d'un moteur selon la revendication 2, **caractérisé en ce qu'**une valeur de débit des gaz d'échappement est calculée et la valeur de base étant déterminée en tant que fonction de la vitesse de rotation du moteur et de la valeur du débit du gaz d'échappement.

6. Procédé de pilotage d'un moteur selon l'une des revendications précédentes, **caractérisé en ce que** l'humidité de l'air aspiré est déterminée et la valeur de base étant corrigée en tant que fonction de cette humidité.

7. Commande de moteur pour la mise en oeuvre du procédé de pilotage d'un moteur selon une ou plusieurs des revendications précédentes, avec au moins un détecteur de gaz d'échappement (16) disposé de préférence dans un coude d'échappement d'un moteur, qui détermine une concentration d'un composant de gaz d'échappement, ce composant étant un oxyde d'azote ($NO_x$) et une unité de pilotage de moteur qui, en fonction de cette concentration, détermine une valeur pour le gaz d'échappement et, au moins pilote un point d'allumage de la commande du moteur en tant que fonction de la valeur du gaz d'échappement de manière telle que la concentration du composant du gaz d'échappement varie aussi peu que possible.

8. Commande de moteur selon la revendication 7, **caractérisée en ce que** l'unité de pilotage de moteur (12) fixe une valeur de base, calcule une valeur différentielle, et modifie la valeur prévue en tant que fonction de la valeur différentielle.

9. Commande de moteur selon la revendication 8, **caractérisée par** un détecteur de vitesse de rotation du moteur (20) et/ou un détecteur de pression d'aspiration (22), l'unité de pilotage de moteur (12) déterminant la valeur de base en tant que fonction de la vitesse de rotation du moteur et/ou de la pression d'aspiration.

10. Commande de moteur selon la revendication 8 ou 9, **caractérisée par** un détecteur d'humidité (24) disposé de préférence dans une tubulure d'aspiration d'un moteur, l'unité de pilotage du moteur (12) corrigeant la valeur de base en tant que fonction de l'humidité déterminée.

Fig.1

Abgasstrom

NO$_x$ Sensor

16

14

Motor

10

Motorsteuereinheit

12

26

T

absoluter Ansaugdruck

22

Drehzahl-sensor

20

Feuchte

24

# Fig.2

100

**102**
Ermittle gespeicherten
NO$_x$ Basiswert aus Tabelle

**104**
Korrigiere NO$_x$- Basiswert
entsprechend der Feuchte,
um NO$_x$- Nominalwert zu erhalten

**106**
NO$_x$ Sensor einlesen

**108**
Berechne den prozentualen
Differenzwert

**110**
Ist prozentualer
|Differenzwert|
> X ?

Nein

Ja

**112**
Speichere prozentualen
Differenzwert

**114**
Bestimme Sollwert - Korrektur

**116**
Speichere Sollwert - Korrektur

**118**
Erzeuge veränderten
Sollwert

**120**
Verwende veränderten
Sollwert

**122**
Ende